# EUROPÄISCHE PATENTSCHRIFT

(11) **EP 1 818 200 B1**
(45) Veröffentlichungstag und Bekanntmachung des Hinweises auf die Patenterteilung: **11.03.2009**
(21) Anmeldenummer: 07010657.0
(22) Anmeldetag: 10.08.2001
(51) Int. Cl.: B60J 1/20, B60R 5/04

(54) **Rollosteuerung für Rollos in Kraftfahrzeugen**
Control system for roller blinds in vehicles
système de commande pour stores installés dans des véhicules automobiles

(30) Priorität: 25.08.2000 DE 10041709
(43) Veröffentlichungstag der Anmeldung: 15.08.2007
(62) Teilanmeldung aus: 01967001.7
(73) Patentinhaber: BOS GmbH & Co. KG, 73760 Ostfildern (DE)
(72) Erfinder: Schlecht, Werner, 71665 Vaihingen/Enz-Aurich (DE); Seel, Holger, 71134 Aidlingen (DE); Laudenbach, Thomas, 72108 Rottenburg (DE)
(74) Vertreter: Rüger, Barthelt & Abel Patentanwälte

(56) Entgegenhaltungen:
- DE-A- 3 920 404
- DE-A1- 19 856 741

## Beschreibung

Die Erfindung betrifft eine Rollosteuerung für ein Abdeckrollo für den Laderaum eines Kraftfahrzeugs. Ein solches Abdeckrollo ist aus der DE 19856741 A bekannt.

Aus der EP 0 240 747 C1 ist ferner ein Heckscheibenrollo für Kraftfahrzeuge bekannt. Das Rollo weist eine drehbar gelagerte Wickelwelle auf, an der mit einer Kante eine Rollobahn befestigt ist. Mit Hilfe zweier Hebel, die in der Nähe der Wickelwelle schwenkbar gelagert sind, und an einer an der Rollobahn angebrachten Fallschiene eingreifen, kann die Rollobahn aufgespannt werden. Um die Rollobahn aufzuspannen, ist eine elektrische Antriebseinrichtung vorgesehen, die an den Schwenkhebeln angreift.

Dieses bekannte Heckscheibenrollo wird von Fahrzeugherstellern im Bereich der Hutablage eingebaut. Zur Betätigung, d.h. zum elektrischen Ein- und Ausfahren ist im Armaturenbrett ein vom Fahrer zu betätigender Schalter vorgesehen, um den Elektromotor entsprechend in Gang zu setzen. Üblicherweise sind noch Zeitsteuerungen oder stromabhängige Steuerungen vorhanden, um beim Erreichen der vollständig ausgefahrenen oder der eingefahrenen Stellung den Motorstrom abzuschalten.

Die DE 39 20 404 A1 beschreibt eine Steuervorrichtung für ein Heckscheibenrollo. Am Ganghebel oder Gangwahlhebel wird ein Signal abgegriffen, wenn der Rückwärtsgang eingelegt ist. Dieses Signal wird dazu verwendet ein gegebenenfalls ausgefahrenes Heckscheibenrollo einzufahren, damit die Sicht nach hinten nicht behindert ist. Nach dem Wechsel aus dem Rückwärtsgang heraus wird das Rollo wieder in den ausgefahrenen Zustand überführt, wenn es zuvor ausgefahren war.

Die DE 198 56 741 A1 zeigt eine Laderaumabdeckung für Kraftfahrzeuge. Die Laderaumabdeckung besteht aus einer Platte oder einer aufwickelbaren Rollobahn. Das Ende der Rollobahn, das zum Heck des Kraftfahrzeugs zeigt, ist kinematisch an die Heckklappe angekoppelt, damit beim Öffnen der Heckklappe die Laderaumabdeckung zumindest zum Teil angehoben wird, um einen erleichterten Zugang zum Laderaum des Kombi-PKW zu schaffen.

Ausgehend hiervon ist Aufgabe der Erfindung eine Rollosteuerung für Laderaumabdeckungen von Kraftfahrzeugen zu schaffen, die einen größeren Benutzerkomfort bietet.

Diese Aufgabe wird erfindungsgemäß durch die Rollosteuerung mit den Merkmalen des Anspruches 1 gelöst.

Weil der Steuereinrichtung ein ereignisabhängiges Signalisierungsmittel zugeordnet ist, kann sie unabhängig vom Fahrer bzw. Benutzer des Fahrzeugs abhängig von mindestens einem sonstigen Ereignis gesteuert werden. Unter sonstigen Ereignissen sind Fahrzeug- und Umgebungsbedingungen zu verstehen, die eine andere als die bestehende Rrolloeinstellung zweckmäßig erscheinen lassen, zu denen nicht der spezielle Wunsch des Fahrers oder Benutzers für eine spezielle Einstellung des betreffenden Rollos gehört.

Das Rollo oder die verschiebliche Abdeckplane zum Abdecken des Kofferraums von Kombi-PKW wird zusammen mit dem Öffnen der Heckklappe in die geöffnete Stellung gefahren.

Zusätzlich zu der ereignisabhängigen Steuerung kann ein durch den Benutzer gewillkürte Kontrolle bzw. Steuerung zweckmäßig sein. In diesem Falle ist zusätzlich ein zweites Signalisierungsmittel vorhanden, das durch den Fahrer oder Benutzer betätigt wird und die Stellung des Rollos vorgibt. Die sonstigen Ereignisse können die vom Benutzer vorgewählte Einstellung des Rollos übersteuern bzw. überdrücken.

Die einfachste Steuerung besteht im wesentlichen aus einem Umpolschalter, der in einer speziellen Weise gestaltet ist, damit beispielsweise zusätzlich über einen entsprechenden Schaltersatz mit Hilfe eines zusätzlichen von einem Sensor kommenden Schaltsignals die Rollobahn ausgefahren werden kann.

Dabei wäre der zusätzliche Eingang an dem Schalter ein entsprechender Steuereingang, über den die ersten Signalisierungsmittel angeschlossen sind.

Es sind jedoch auch elektronische Steuereinrichtungen denkbar, die einen Stromversorgungseingang und einen Stromausgang aufweisen, an den der Elektromotor der Antriebseinrichtung angeschlossen ist. Weiterhin verfügt die Steuereinrichtung über ein oder zwei Steuereingänge, an die die betreffenden Signalisierungsmittel angeschlossen bzw. in die die Signale von den Signalisierungsmittel eingespeist werden.

Ferner kann die Steuereinrichtung über einen eigenen Mikroprozessor verfügen, womit die Steuereinrichtung von der übrigen Kraftfahrzeugsteuerung im wesentlichen unabhängig wird. Diese Lösung eröffnet eine modulare Nachrüstung der bestehenden Systeme.

Eine andere Variante besteht darin, die Steuereinrichtung in die zentrale Kraftfahrzeugsteuerung zu implementieren, was zusätzliche Elektronik zu vermeiden hilft. Hierbei kann auf den oder die Prozessoren der zentralen Steuerung zurückgegriffen werden, wobei die eigentliche Steuereinrichtung für das Rollo praktisch zu einem Programmstück wird, dass in der zentralen Steuerung abläuft. Die zweiten Signalisierungsmittel, die durch den Fahrer willkürlich zu betätigen sind, können von einem Schalter oder Taster gebildet sein, oder es kann sich um eine Programmvariable handeln, deren Wert durch einen Schalter oder Taster verändert wird. Auch dieser Schalter oder Taster ist wiederum willkürlich durch den Fahrer zu betätigen.

Sinngemäß die gleichen Möglichkeiten bestehen auch für die ersten Signalisierungsmittel, die ereignisabhängig wirken.

Anstelle eines Schalters kann auch ein sonstiger Sensor beispielsweise eine Feldplatte oder ein Hallsensor eingesetzt werden.

Bei einer elektronischen Getriebesteuerung können die zweiten Signalisierungsmittel, die ereignisabhängig wirken, auch ein elektrisches Signal sein, das aus der zentralen Kraftfahrzeugssteuerung erhalten wird, bzw. eine entsprechende Programmvariable.

Die obigen Varianten stellen nur eine kleine Auswahl einer Vielzahl denkbarer Alternativen, Abwandlungsmöglichkeiten und Umwelt- bzw Betriebsereignissen dar. Es werden deswegen auch solche Kombination von Merkmalen der abhängigen Ansprüche untereinander und mit dem Hauptanspruch beansprucht, die nicht Gegenstand eines speziellen Ausführungsbeispiels sind.

In der Zeichnung sind Ausführungsbeispiele einer Rollosteuerung für Fensterrollos eines Fahrzeugs dargestellt. Eine solche steuerung kann sinngemäß auch für ein erfindungsgemäßes Abdeckrollo eingesetzt werden. Es zeigen:
- Fig. 1: eine Ansicht aus einem Kraftfahrzeug mit einem Seitenfensterrollo und einem Heckfensterrollo, in einer stark schematisierten perspektivischen Darstellung,
- Fig. 2: ein stark schematisiertes Blockschaltbild für die Steuerung des Fensterrollos,
- Fig. 3: ein anderes Blockschaltbild einer Rollosteuerung in Verbindung mit einer zentralen Kraftfahrzeugsteuerung, in einem stark schematisierten Blockschaltbild,
- Fig. 4: ein vereinfachtes Flussdiagramm, wie es in einem Mikroprozessor oder Mikrocontroller bei den Ausführungsbeispielen nach den Figuren 3 und 4 ablaufen kann, und
- Fig. 5: eine stark vereinfachte Schaltungsanordnung bestehend aus einem elektromechanischen Schalter und einem zusätzlichen ersten Signalisierungsmittel

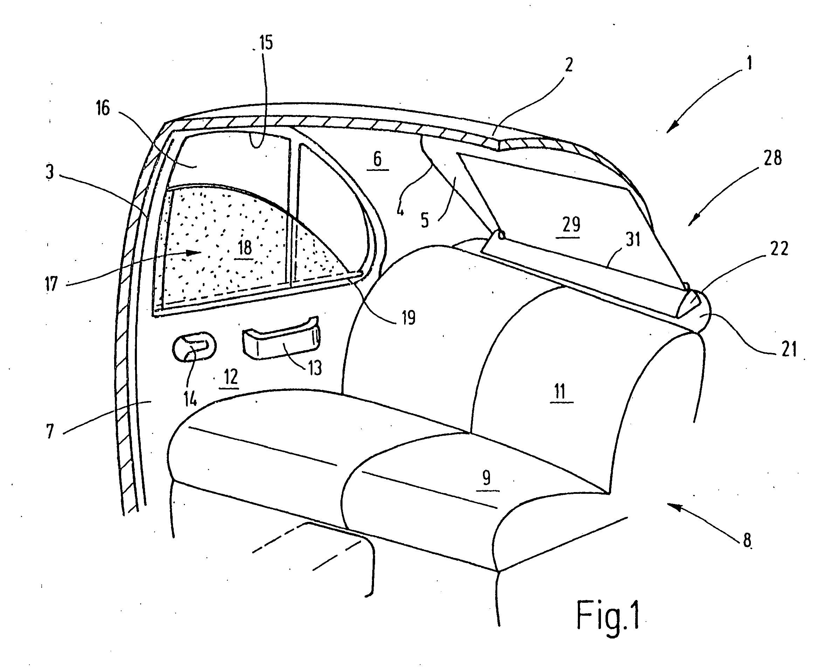

Fig. 1 stellt einen aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9. sowie eine Rücksitzlehne 11 gehören.

Die dem Innenraum zugekehrte Innenseite der Seitentür 7 ist mit einer Innenverkleidung 12 versehen, an der ein Türgriff 13 befestigt ist und in dem eine Betätigungsklinke 14 eingelassen ist, um das Schloss der Seitentür 7 zu öffnen.

Die Seitentür 7 enthält oberhalb der Innenverkleidung 12 eine Fensteröffnung 15. In der Fensteröffnung 15 befindet sich eine in bekannter Weise versenkbare Seitenfensterscheibe 16.

Die Seitentür 7 ist mit einem Seitenfensterrollo 17 versehen, dessen Rollobahn 18 in den Darstellungen der Figur 1 teilweise ausgefahren ist, um so den Fondbereich der Fahrgastzelle gegen seitliche Sonneneinstrahlung zu schützen. Die Rollobahn 18 läuft durch einen unterhalb der Fensteröffnung 15 vorhandenen Schlitz 19.

Die Ausgestaltung des Seitenfensterrollos 17 ist in der nicht vorveröffentlichten Patentanmeldung DE 100 05 970 beschrieben.

Zusätzlich zu dem gezeigten Seitenfensterrollo, kann das Fahrzeug in beiden Seiten mit Fensterrollos beispielsweise auch im Bereich der vorderen Türen ausgestattet sein.

Hinter der Rücksitzlehne 11 befindet sich eine Hutablage 21, die den Raum zwischen der Rücksitzlehne 11 und der Unterkante der Heckscheibe 2 weitgehend ausfüllt. Auf dieser Hutablage 21 ist ein Gehäuse 22 eines Heckscheibenrollos 23 angeordnet. Das Heckscheibenrollo 28 weist eine aufgespannt veranschaulichte Rollobahn 29 auf, die aus einem Schlitz 31 des Gehäuses ausgezogen wird. Das Heckscheibenrollo 28 ist beispielsweise so gestaltet, wie dies in der EP 0 240 747 C1 ausführlich dargestellt ist.

Diese gezeigten Fensterrollos dienen dazu, die Sonneneinstrahlung in den Innenraum des Kraftfahrzeugs zu vermindern, um die Aufheizung auf Grund eines Treibhauseffektes zu vermindern.

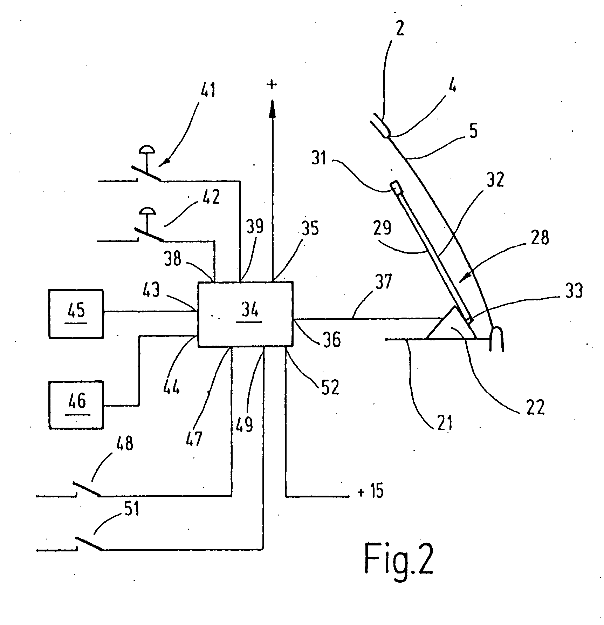

Figur 2 veranschaulicht ein Blockschaltbild für einen teilweise automatisierten Betrieb der Fensterrollos. Dabei wird beispielhaft die Steuerung des Heckfensterrollos 28 angegeben. Es versteht sich, dass die gegebene Erläuterung sinngemäß auch für die Seitenfensterrollos gilt.

In dem Gehäuse 22 befindet sich entsprechend dem Stand der Technik eine drehbargelagerte Wickelwelle, an der mit einer Kante die Rollobahn 29 befestigt ist. Die Wickelwelle wird mit Hilfe eines Federmotors im Sinne eines Aufwickelns der Rollobahn 29 vorgespannt. An der anderen Kante der Rollobahn 29 ist eine Zugschiene 31 befestigt, an der Schwenkhebel 32 angreifen, die bei 33 an dem Gehäuse 22 gelagert sind. Die Verschwenkung der Hebel 32 geschieht mit Hilfe eines nicht weitergezeigten Elektromotors über ein entsprechendes Getriebe. Der Elektromotor ist ein permanent erregter-Gleichstrommotor, dessen Drehrichtung durch die Polarität der angeschlossenen Stromversorgung definiert wird.

Die Steuerung enthält ein eigentliches Steuergerät oder eine Steuereinrichtung 34 mit einem an das Bordnetz anzuschließenden Stromversorgungseingang 35 sowie einem Stromausgang 36, der über ein zweipoliges Verbindungskabel 37 mit dem Elektromotor des Heckscheibenrollos 28 verbunden ist.

Zwei weitere Eingänge 38 und 39 sind über entsprechende Leitungen mit zwei Handtastern 41 und 42 verbunden. Die Handtaster 41 und 42 sind beispielsweise Taster mit einer gemeinsamen Wippe und dazu vorgesehen, durch den Benutzer des Fahrzeugs oder auch einen anderen Fahrzeuginsassen manuell betätigt zu werden.

Die beiden Handtaster 41 und 42 dienen als Signalisierungsmittel, um abhängig von diesem Zustand die Bewegungsrichtung beziehungsweise den Zustand des Heckscheibenrollos 28 zu definieren.

Zwei weitere Eingänge 43 und 44 sind über betreffende Leitungen mit einem Lichtsensor 45 und einem Temperaturfühler 46 verbunden. Der Lichtsensor 45 besteht beispielsweise aus einer Fotodiode oder einem Cadmiumsulfid-Fotowiderstand, während der Temperatursensor ein temperaturempfindlicher Widerstand ein PTC- oder NTC-Widerstand sein kann.

Ein fünfter Eingang 47 liegt über eine betreffende Leitung an einem Schalter 48, der mit dem Schalt- oder Gangwahlhebel des Kraftfahrzeugs verbunden ist. Ein Eingang 49 steht mit einem Schalter 51 in Verbindung, der von der Heckklappe des Fahrzeugs betätigt wird, wenn es sich bei dem Fahrzeug um ein Kombi-Fahrzeug oder einen Pkw mit großer Heckklappe handelt, bei dem das gezeigte Heckfenster in der Heckklappe integriert ist.

Ein Eingang 52 ist schließlich mit der Klemme +15 des Zündschlosses bzw. der Zündspule verbunden, um der Steuerungseinrichtung 34 zu signalisieren, ob das Fahrzeug im Betrieb ist oder nicht.

Die Sensoren 35 und 46 sowie die Schalter 48 und 51 und das elektrische Signal an dem Eingang 52 stellen weiter Signalisierungsmittel dar, deren Zustand ereignisabhängig ist. Unter "ereignisabhängig" sollen hier sämtliche Ereignisse verstanden sein, die der Steuereinrichtung 34 übermittelt werden und sich aus dem Betriebszustand des Fahrzeugs sowie Umweltbedingungen ergeben mit Ausnahme des speziellen Wunsches von Fahrzeuginsassen hinsichtlich der Betriebsstellung des oder der betreffenden Fensterrollos.

Die Funktionsweise der dargestellten Rollosteuerung ist wie folgt:

Wenn der Benutzer des Fahrzeugs wünscht, dass das Heckscheibenrollo 28 ausgefahren wird, betätigt er kurzzeitig den Taster 41, wodurch ein Stromimpuls in den Eingang 39 der Steuereinrichtung 34 gelangt. Diese schaltet daraufhin mit der erforderlichen Polarität die über den Eingang 35 erhaltene Versorgungsspannung zu dem Ausgang 36 durch, damit der Motor des Heckscheibenrollos 28 über die zweipolige Leitung 37 Strom mit der erforderlichen Polarität erhält. Der Motor wird dadurch in Gang gesetzt, und verschwenkt die beiden Hebel 32 im Sinne eine Ausfahrens der Rollobahn 29.

Die Steuereinrichtung 34 hält die Stromversorgung für den Motor des Heckscheibenrollos 28 für eine vorbestimmte Zeit eingeschaltet, die mit Sicherheit länger ist als das Heckscheibenrollo 28 zum vollständigen Ausfahren benötigt.

Wenn das Heckscheibenrollo 28 an den mechanischen Anschlägen ankommt, wird die Bewegung des Motors blockiert und es tritt ein Blockierstrom auf. Nach Ablauf der oben erwähnten Zeit, die in der Steuereinrichtung 34 fest vorgegeben ist, wird der Motorstrom abgeschaltet.

Die Dauer, für die der Motor mit Strom versorgt wird, ist unabhängig davon, wie lange der Benutzer den Taster 41 betätigt hält.

Wenn der Benutzer einen Einfahren des Heckscheibenrollos 28 wünscht, betätigt er impulsweise den Taster 42. Die Steuereinrichtung 35 schaltet daraufhin die an dem Eingang, 35 anliegend Spannung mit einer entsprechenden Polarität zu dem Ausgang 36 durch. Die Polarität ist der Polarität entgegengesetzt, die zum Ausfahren der Rollobahn 28 erforderlich ist.

Auch beim Einfahren wird wiederum der Elektromotor des Heckscheibenrollos 28 für eine vorbestimmte Zeit mit elektrischer Energie versorgt. Die Zeit ist in der Steuereinrichtung 34 so bemessen, dass das Heckscheibenrollo 28 mit Sicherheit eingefahren ist, ehe die Stromversorgung für den Motor abgeschaltet wird.

Je nach Programmierung der Steuereinrichtung 34 kann, bevor eine Funktion entsprechend den Tastern 41 und 42 ausgeführt wird, gegebenenfalls auch zuvor überprüft werden, ob das Fahrzeug im Betrieb ist. Hierzu wird das Signal an dem Eingang 42 abgefragt. Bei eingeschalteter Zündung, beziehungsweise laufendem Motor steht an der Klemme +15 des Zündschlosses beziehungsweise der Zündspule eine Spannung an, um zu signalisieren, dass das Fahrzeug in Betrieb ist. Abhängig von diesem Ereignis kann die manuelle Betätigung des Heckscheibenrollos 28 über die Taste 41 und 42 gesperrt sein, d.h. das Betätigen der Taste 41 und 42 führt nicht zu einer Stromabgabe der Steuereinrichtung 34 an den Motor.

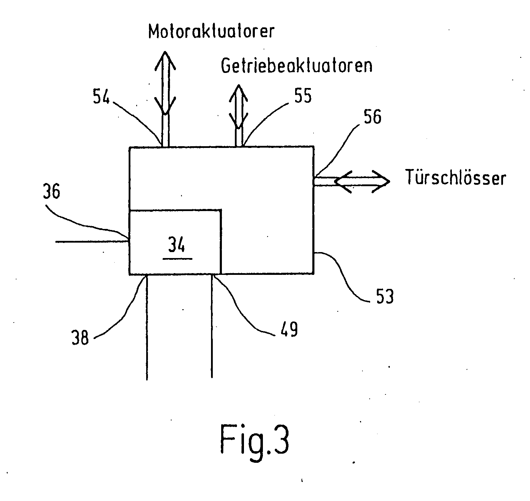

Gemäß Fig. 3 kann die beschriebene Steuereinrichtung 34 mit den angeschlossenen Signalisierungsmitteln auch Bestandteil einer zentralen Fahrzeugsteuerung 53 sein, wie sie in Figur 3 stark schematisiert angegeben ist. Die zentrale Fahrzeugsteuerung 53 weist beispielsweise mehrpolige Ausgänge 54, 55 oder 56 auf, über die lediglich beispielhaft genannt Motoraktuatoren zur Ventilverstellung, Getriebeaktuatoren zum Schalten des Getriebes oder Türschlösser betätigt werden.

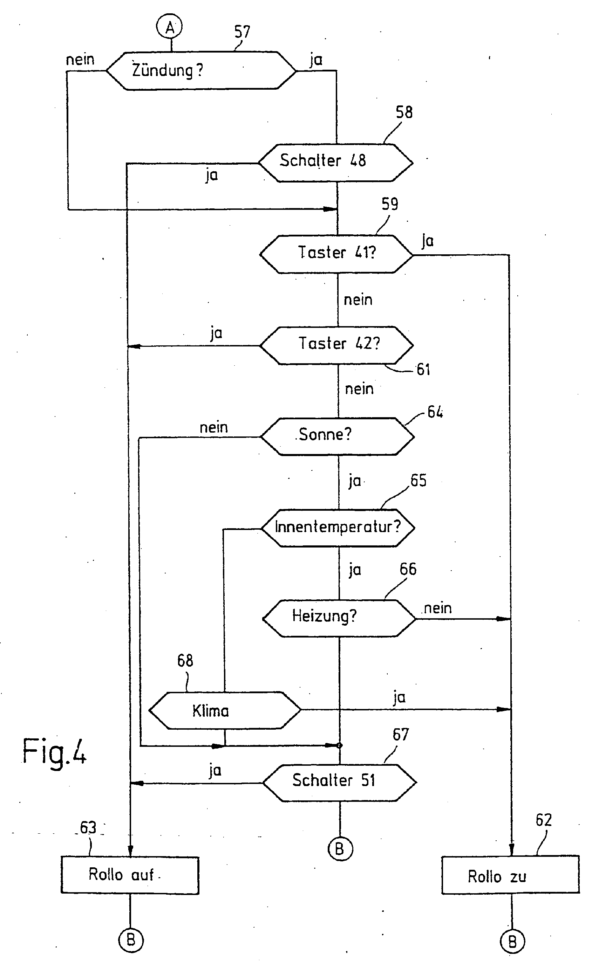

Fig. 4 zeigt ein vereinfachtes Flussdiagramm, wie es in der Steuerungseinrichtung 34 ablaufen kann. Das Programm beginnt bei A und fragt zunächst in einem Abfrageblock 57 ab, ob die Zündung eingeschaltet ist oder nicht, was auf eine Abfrage des Signalzustands an dem Eingang 52 hinausläuft. Wenn die Zündung eingeschaltet ist, wird der Schalter 48 überprüft, der das Einlegen des Rückwärtsgangs signalisiert. Falls die Zündung nicht eingeschaltet ist, kann diese Abfrage übersprungen werden, d.h. wenn bei ausgeschalteter Zündung der Rückwärtsgang eingelegt wird, hat dies auf den Zustand des Heckscheibenrollos keinen Einfluss.

Der Zustand des Schalters 48 wird in einem Abfrageblock 58 überprüft und führt zu den oben erwähnten Konsequenzen. Wenn der Schalter 48 nicht betätigt ist, fährt das Programm mit Abfrageblöcken 59 und 61 fort, in denen der vom Fahrer manuell zu betätigende Taste 41 bzw. 43 überprüft wird. Ist der Taster 41 betätigt geht das Programm zu einem Anweisungsblock 62, an dem bewirkt wird, dass der Stromausgang 36 für eine vorbestimmte Zeit Strom aus dem Stromeingang 35 enthält, und zwar mit einer Polarität, die dem Ausfahren des Heckscheibenrollos 28 entspricht. Von dort geht das Programm zu dem Punkt B, wo unter Umständen eine andere Programmroutine angesprungen wird oder aber zu dem Startpunkt A zurückgekehrt wird.

Wurde im Abfrageblock 61 festgestellt, dass der Fahrer den Taster 42 zum Einfahren betätigt hat, geht das Programm zu einem Anweisungsblock 63, der wiederum dafür sorgt, dass der Stromausgang 36 Strom aus dem Stromeingang 35 erhält, jedoch mit einer Polarität, die dem Einfahren der Rollobahn 29 entspricht. Anschließend gelangt das Programm zu dem Programmpunkt B wie zuvor erwähnt.

Wurde keiner der Taster 41 und 42 betätigt, wird in einem Abfrageblock 64 das Signal geprüft, das der Licht-oder Sonnensensor 45 liefert. Wird eine starke Sonneneinstrahlung festgestellt, wird in einem Abfrageblock 65 die Innentemperatur überprüft, die mit Hilfe des Temperatursensors 46 erfasst wird. Wenn die Temperatur über einem vorbestimmten Wert liegt, wird nachfolgend in einem Abfrageblock 66 ermittelt, ob die Heizung eingeschaltet ist. Wenn nein, verzweigt das Programm zu dem bereits erläuterten Anweisungsblock 62. Andernfalls fährt es mit einem Abfrageblock 67 fort, wo der Zustand des Schalters 51 für die Heckklappe überprüft wird. Ist die Heckklappe geschlossen, gelangt das Programm zu dem Programmpunkt B, andernfalls verzweigt es zu dem Anweisungsblock 63 und öffnet das Heckscheibenrollo 28.

Wenn das Programm in dem Abfrageblock 65 feststellt, dass die Innentemperatur an sich zu niedrig ist, um das Rollo zu betätigen, verzweigt das Programm zu einem Abfrageblock 68 und überprüft den Zustand der Klimaanlage. Wenn die Klimaanlage eingeschaltet ist, wird über den Anweisungsblock 62 fortgefahren, andernfalls kehrt das Programm zu dem Anfang des Abfrageblockes 67 zurück.

Wird in dem Abfrageblock 64 keine ausreichende Sonneneinstrahlung festgestellt, verzweigt das Programm unmittelbar zu dem Eingang des Abfragblocks 67.

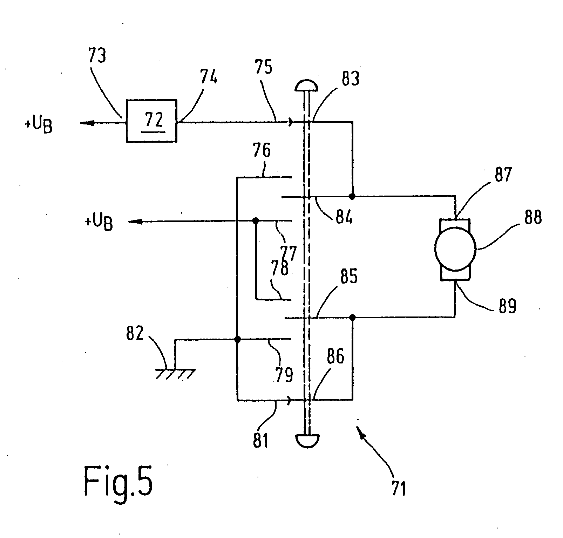

Fig. 5 zeigt das Schaltbild einer sehr einfachen Komfortsteuerung, die lediglich auf Sonnenlicht anspricht. Die Steuereinrichtung besteht im wesentlichen nur aus einem mehrpoligen Schalter 71 und einem "intelligenten" aktiven Sonnensensor 72.

Der Sonnensensor 72 ist derart gestaltet, dass bei wenig Licht keine elektrische Verbindung zwischen seinem Stromversorgungsseingang 73 und seinem Ausgang 74 besteht. Wenn hingegen die Sonneinstrahlung einen bestimmten Schwellwert überschreitet, wird die Verbindung zwischen den beiden Anschlüssen 73 und 74 für eine beschränkte Zeit niederohmig.

Der mechanische Schalter weist mehrere feststehende Kontakte 75, 76, 77, 78, 79 und 81 auf.

Der feststehende Kontakt 75 ist mit dem Ausgang 74 des Sonnensensors 72 verbunden. Die beiden feststehenden Kontakte 76 und 79 liegen gemeinsam zusammen mit dem feststehen Könak 81 an einer Fahrzeugmasse 82, während die beiden feststehenden Kontakte 77 und 78 gemeinsam an die Bordnetzspannung angeschlossen sind.

Mit dem feststehenden Kontakt 75 wirkt ein beweglicher Kontakt 83 zusammen, der in der Ruhestellung des Schalters 71 mit dem Kontakt 75 tatsächlich auch einen elektrischen Kontakt macht. Ein weiterer beweglicher Kontakt 84 ist wahlweise mit den feststehenden Kontakten 76 und 77 in Berührung zu bringen, während ein beweglicher Kontakt 85 mit den feststehenden Kontakten 78 und 79 zu verbinden ist. Die beiden beweglichen Kontakte 84 und 85 haben in der Ruhestellung keine elektrische Verbindung mit den zugehörigen feststehenden Kontakten 76 und 77 bzw. 78 und 79.

Schließlich enthält der Schalter 71 noch einen beweglichen Kontakt 86, der in der Ruhestellung des Schalters 71 eine elektrische Verbindung mit dem feststehenden Kontakt 81 herstellt. Die beweglichen Kontakte 83 und 84 liegen gemeinsam an einer Eingangsklemme 87 des Antriebsmotors 88 des Heckscheibenrollos, während die Kontakte 85 und 86 an einem anderen Eingangsanschluss 89 liegen.

Die Schaltung arbeitet wie folgt:

Wenn der Benutzer den in die Ruhelage federvorgespannten Schalter 71 betätigt, beispielsweise in dem Sinne, dass der bewegliche Kontakt 84 mit dem feststehenden Kontakt 76 in Berührung kommt, wird auch der Stromkreis zwischen dem Kontakt 77 und dem Kontakt 85 geschlossen, während die Stromkreise über die Kontakte 83 und 86 unterbrochen werden. Der Motor erhält über die beweglichen Kontakte 84 und 85 Strom und zwar in der Weise, dass er im Sinne eines Ausfahrens des Heckscheibenrollos 28 in Bewegung gesetzt wird. Er erhält so lange Strom, bis der Benutzer den Schalter 71 loslässt, womit der Schalter 71 in die gezeigte Ruhestellung zurückkehrt. Die Stromversorgung zu dem Motor 88 ist damit zunächst abgeschaltet, während das Heckscheibenrollo 28 eingefahren ist.

Zum Einfahren des Heckscheibenrollos betätigt der Benutzer den Schalter 71 in der entgegengesetzten Richtung, d.h. der Motor 88 erhält Strom über die feststehenden Kontakte 77 und 79.

Wenn bei eingefahrenem Rollo der Sonnensensor 72 eine übermäßige Sonnenstrahlung meldet, enthält der Motor 88 über die feststehenden Kontakte 75 und 81 Strom, im Sinne eines Ausfahrens der Rollobahn. Die Zeit, für die der Motor 88 bestromt wird, steuert ein entsprechendes Zeitglied indem Sonnensensor 72.

Die Erfindung wurde oben an Hand von Fensterrollos erläutert. Erfindungsgemäß wird die beschriebene Rollosteuerung zur Steuerung von Abdeckrollos von Laderäumen eingesetzt. Dazu wird die Laderaumtür über einen Türkontakt überwacht, um beim Öffnen der Laderaumtür die Abdeckung zurückzufahren. Das Schließen sollte zweckmäßigerweise durch den Benutzer und nicht automatisch erfolgen.

## Patentansprüche

1. Rollosteuerung für ein Abdeckrollo für den Laderaum eines Kraftfahrzeugs, wobei das Abdeckrollo mit einer kraftbetriebenen Antriebseinrichtung (88) ausgestattet ist, durch die eine Rollobahn des Abdeckrollos wahlweise und zumindest teilweise ein- oder auszufahren ist,
mit einer Steuereinrichtung (34,71), die derart gestaltet ist, dass sie zum Steuern der Antriebseinrichtung (88) geeignet ist, und
mit ersten Signalisierungsmitteln (51), deren Zustand ereignisabhängig ist und die mit der Steuereinrichtung (34) zusammenwirken, um die Steuereinrichtung (34) zu veranlassen die Antriebseinrichtung (88) der Rollobahn (18,29) des Kraftfahrzeugs im Sinne des Öffnens in Gang zu setzen, wenn die Heckklappe des Kraftfahrzeugs geöffnet wird.

2. Rollosteuerung nach Anspruch 1, **dadurch gekennzeichnet, dass** zusätzlich zweite Signalisierungsmitteln (41,42,71) vorhanden sind, deren Zustand unmittelbar durch einen Benutzer des Fahrzeugs festzulegen ist, um die Steuereinrichtung (34) zu veranlassen die Antriebseinrichtung. (88) in Gang oder still zu setzen.

3. Rollbsteuerung nach Anspruch 1, **dadurch gekennzeichnet, dass** die Steuereinrichtung (34,71) wenigstens einen Schalter (71) aufweist.

4. Rollosteuerung nach Anspruch 1, **dadurch gekennzeichnet, dass** die Steuereinrichtung (34,71) einen Stromversorgungseingang (35,76,77,78,79) und einen Stromausgang (36,84,85) aufweist, der zum Anschluss an die Antriebseinrichtung (88) des Rollos vorgesehen ist.

5. Rollosteuerung nach Anspruch 1, **dadurch gekennzeichnet, dass** die Steuereinrichtung (34,71) einen ersten Steuereingang (49) aufweist, in den ein Signal der ersten Signalisierungsmittel (51) einzuspeisen ist oder an den die ersten Signalisierungsmittel (51) angeschlossen sind.

6. Rollosteuerung nach Anspruch 2, **dadurch gekennzeichnet, dass** die Steuereinrichtung (34,71) einen zweiten Steuereingang (38,39) aufweist, in den ein Signal der zweiten Signalisierungsmittel (41,42,71) einzuspeisen ist oder an den die zweiten Signalisierungsmittel (41,42,71) angeschlossen sind.

7. Rollosteuerung nach Anspruch 1, **dadurch gekennzeichnet, dass** die Steuereinrichtung (34) einen eigenen Mikroprozessor aufweist.

8. Rollosteuerung nach Anspruch 1, **dadurch gekennzeichnet, dass** die Steuereinrichtung (34) in eine zentrale Kraftfahrzeugsteuerung (53) eingebettet ist.

9. Rollosteuerung nach Anspruch 1, **dadurch gekennzeichnet, dass** die Steuereinrichtung (34) ein Programmstück einer Kraftfahrzeugsteuerung (53) ist.

10. Rollosteuerung nach Anspruch 2, **dadurch gekennzeichnet, dass** die zweiten Signalisierungsmittel (41,42) wenigsten einem Schalter oder Taster umfassen.

11. Rollosteuerung nach Anspruch 2, **dadurch gekennzeichnet, dass** die zweiten Signalisierungsmittel von einer Programmvariablen gebildet sind, deren Wert von wenigsten einem Schalter (41,42) oder Taster definiert wird.

12. Rollosteuerung nach Anspruch 1, **dadurch gekennzeichnet, dass** die ersten Signalisierungsmittel (51) wenigsten von einem Schalter (51) oder Taster gebildet sind.

13. Rollosteuerung nach Anspruch 1, **dadurch gekennzeichnet, dass** die ersten Signalisierungsmittel (51) von einer Programmvariablen gebildet sind, deren Wert von wenigsten einem Schalter (51) oder Taster definiert wird.

14. Rollosteuerung nach Anspruch 1, **dadurch gekennzeichnet, dass** die ersten Signalisierungsmittel (51) einen Sensor (51) umfassen.

15. Rollosteuerung nach Anspruch 14, **dadurch gekennzeichnet, dass** der Sensor (51) ein elektromechanischer Schalter ist.

16. Rollosteuerung nach Anspruch 14, **dadurch gekennzeichnet, dass** der Sensor (51) ein magnetfeldabhängiger Sensor ist.

17. Rollosteuerung nach Anspruch 14, **dadurch gekennzeichnet, dass** der Sensor (51) eine Feldplatte ist.

18. Rollosteuerung nach Anspruch 14, **dadurch gekennzeichnet, dass** der Sensor (51) eine Hallsonde ist,

19. Rollosteuerung nach Anspruch 1, **dadurch gekennzeichnet, dass** die Steuereinrichtung (34) Zeitmittel enthält, derart, dass nach einer vorgegebenen Zeitspanne die Antriebseinrichtung (88) in der umgekehrten Bewegungsrichtung in Gang gesetzt wird.

20. Rollosteuerung nach Anspruch 1, **dadurch gekennzeichnet, dass** die Steuereinrichtung (34,52) einen Speicher enthält, in dem der vorhergehende Betriebszustand gespeichert wird.

## Claims

1. Roller blind control system for a roller cover for the cargo area of a motor vehicle, wherein the roller cover is equipped with a power-operated drive means (88), by means of which a blind sheet of the roller cover can be selectively and at least partially retracted or extended,
with a control means (34, 71), which is configured so that it is suitable for controlling the drive means (88), and
with first signalling elements, the status of which is event-dependent and which cooperate with the control means (34) in order to cause the control means (34) of the blind sheet (18, 29) of the motor vehicle to be set in operation for the purpose of opening when the tail gate of the motor vehicle is opened.

2. Roller blind control system according to claim 1, **characterised in that** second signalling elements (41, 42, 71) are additionally provided, the status of which can be determined directly by a user of the vehicle in order to cause the control means (34) to set the drive means (88) in operation or to stop same.

3. Roller blind control system according to claim 1, **characterised in that** the control means (34, 71) has at least one switch (71).

4. Roller blind control system according to claim 1, **characterised in that** the control means (34, 71) has a power supply input (35, 76, 77, 78, 79) and a power output (36, 84, 85), which is provided for connection to the drive means (88) of the roller cover.

5. Roller blind control system according to claim 1, **characterised in that** the control means (34, 71) has a first control input, into which a signal of the first signalling elements can be fed or to which the first signalling elements are connected.

6. Roller blind control system according to claim 2, **characterised in that** the control means (34, 71) has a second control input (38, 39), into which a signal of the second signalling elements (41, 42, 71) can be fed or to which the second signalling elements (41, 42, 71) are connected.

7. Roller blind control system according to claim 1, **characterised in that** the control means (34) has its own microprocessor.

8. Roller blind control system according to claim 1, **characterised in that** the control means (34) is embedded into a central motor vehicle control system (53).

9. Roller blind control system according to claim 1, **characterised in that** the control means (34) is a program section of a motor vehicle control system (53).

10. Roller blind control system according to claim 2, **characterised in that** the second signalling elements (41, 42) comprise at least one switch or pushbutton.

11. Roller blind control system according to claim 2, **characterised in that** the second signalling elements are formed by a program variable, the value of which is defined by at least one switch (41, 42) or pushbutton.

12. Roller blind control system according to claim 1, **characterised in that** the first signalling elements are formed at least by one switch (51) or pushbutton.

13. Roller blind control system according to claim 1, **characterised in that** the first signalling elements are formed by a program variable, the value of which is defined by at least one switch (51) or pushbutton.

14. Roller blind control system according to claim 1, **characterised in that** the first signalling elements comprise a sensor (51).

15. Roller blind control system according to claim 14, **characterised in that** the sensor (51) is an electromagnetic switch.

16. Roller blind control system according to claim 14, **characterised in that** the sensor (51) is a magnetic field-dependent sensor.

17. Roller blind control system according to claim 14, **characterised in that** the sensor (51) is a magnetoresistor.

18. Roller blind control system according to claim 14, **characterised in that** the sensor (51) is a Hall probe.

19. Roller blind control system according to claim 1, **characterised in that** the control means (34) contains time elements such that after a given period of time the drive means (88) is set in motion in the reverse direction of movement.

20. Roller blind control system according to claim 1, **characterised in that** the control means (34, 52) contains a storage means, in which the preceding operating status is stored.

## Revendications

1. Système de commande pour un store de couverture de l'espace de chargement d'un véhicule automobile, ce store (17, 28) comportant un dispositif d'entraînement (88) alimenté en force motrice et par lequel une bande du store peut être à volonté sortie ou rentrée au moins en partie, ce système comportant
- un dispositif de commande (34, 71) qui est configuré de manière à pouvoir commander le dispositif d'entraînement (88),
- des premiers moyens de signalisation (51) dont l'état est fonction des événements et qui coopèrent avec le dispositif de commande (34) de manière à activer celui-ci pour qu'il amène le dispositif d'entraînement (88) à faire s'ouvrir ce store quand le hayon est ouvert.

2. Système de commande selon la revendication 1, **caractérisé en ce qu'**il comprend en plus des seconds moyens de signalisation (41, 42, 71) dont l'état doit être fixé directement par un utilisateur du véhicule automobile de manière à activer le dispositif de commande (34) pour que celui-ci mette le dispositif d'entraînement (88) en marche ou à l'arrêt.

3. Système de commande selon la revendication 1, **caractérisé en ce que** le dispositif de commande (34, 71) présente au moins un contacteur (71).

4. Système de commande selon la revendication 1, **caractérisé en ce que** le dispositif de commande (34, 71)) présente une première entrée d'alimentation en courant (35, 76, 77, 78, 79) et une sortie de courant (36, 84, 85) prévue pour être raccordée au dispositif d'entraînement (88) du store..

5. Système de commande selon la revendication 1, **caractérisé en ce que** le dispositif de commande (34, 71) présente une première entrée de commande (49) pour recevoir un signal des premiers moyens de signalisation (51) ou à laquelle sont raccordés ces premiers moyens de signalisation (51).

6. Système de commande selon la revendication 2, **caractérisé en ce que** le dispositif de commande (34, 71) présente une seconde entrée de commande (38, 39) pour recevoir un signal des seconds moyens de signalisation (41, 42, 71) ou à laquelle sont raccordés ces seconds moyens de signalisation (41, 42, 71).

7. Système de commande selon la revendication 2, **caractérisé en ce que** le dispositif de commande (34) a son propre microprocesseur.

8. Système de commande selon la revendication 1, **caractérisé en ce que** le dispositif de commande (34) est incorporé à une commande centrale du véhicule (53).

9. Système de commande selon la revendication 1, **caractérisé en ce que** le dispositif de commande (34) est une partie de programme d'une commande de véhicule (53).

10. Système de commande selon la revendication 1, **caractérisé en ce que** les seconds moyens de signalisation (41, 42) comprennent au moins un commutateur ou un capteur.

11. Système de commande selon la revendication 2, **caractérisé en ce que** les seconds moyens de signalisation sont constitués par une variable de programme dont la valeur est définie par au moins un commutateur (41, 42) ou un palpeur.

12. Système de commande selon la revendication 1, **caractérisé en ce que** les premiers moyens de signalisation (51) sont constitués par au moins un commutateur (51) ou un palpeur.

13. Système de commande selon la revendication 1, **caractérisé en ce que** les premiers moyens de signalisation (51) sont constitués par une variable de programme dont la valeur est définie par au moins un commutateur (51) ou un palpeur.

14. Système de commande selon la revendication 1, **caractérisé en ce que** les premiers moyens de signalisation (51) comprennent un capteur (51).

15. Système de commande selon la revendication 14, **caractérisé en ce que** le capteur (51) est un commutateur électromécanique.

16. Système de commande selon la revendication 14, **caractérisé en ce que** le capteur (51) est un capteur sensible au champ magnétique.

17. Système de commande selon la revendication 14, **caractérisé en ce que** le capteur (51) est une magnétorésistance.

18. Système de commande selon la revendication 14, **caractérisé en ce que** le capteur (51) est une sonde à effet Hall.

19. Système de commande selon la revendication 1, **caractérisé en ce que** le dispositif de commande (34) comprend des moyens de mesure de temps de manière qu'après un délai prédéfini, le dispositif d'entraînement (88) est mis en marche dans le sens de déplacement inverse.

20. Système de commande selon la revendication 1, **caractérisé en ce que** le dispositif de commande (34, 52) contient une mémoire dans laquelle est enregistré l'état de fonctionnement précédent.
